Europäisches Patentamt

European Patent Office

Office européen des brevets

(11) Publication number: **0 511 714 A2**

# EUROPEAN PATENT APPLICATION

(21) Application number: **92201196.0**

(22) Date of filing: **29.04.92**

(51) Int. Cl.5: **A01C 17/00**

(30) Priority: **29.04.91 NL 9100739**

(43) Date of publication of application:
**04.11.92 Bulletin 92/45**

(84) Designated Contracting States:
**DE DK FR GB NL**

(71) Applicant: **GREENLAND N.V.**
**Hoofdweg 1278, P.O. Box 1000**
**NL-2150 BA Nieuw-Vennep(NL)**

(72) Inventor: **Vissers, Hermanus Hendrik**

Herenweg 59
**NL-2465 AB Rijnsaterwoude(NL)**
Inventor: **Mijnders, Gijsbert Jan**
Oranjelaan 12
**NL-2161 KE Lisse(NL)**

(74) Representative: **Hoorweg, Petrus Nicolaas et**
**al**
**OCTROOIBUREAU ARNOLD & SIEDSMA**
**Sweelinckplein 1**
**NL-2517 GK The Hague(NL)**

(54) **Spreader.**

(57) A device for spreading disseminable material comprising a frame (1) movable over the ground, at least one storage container (5) supported by the frame and having at least one outflow opening (6) for the material, a dosing mechanism (7) connecting onto the outflow opening and consisting of a standing cylindrical tube-like element (15) with a recess (31) arranged in the wall thereof and an adjustable plate (25) closing off this recess and a rotatably driven bottom plate (8) closing the open underside of the tube-like element, wherein the recess in the cylinder wall of the tube-like element widens from the bottom edge thereof towards the top so that the passage thereof is not enlarged linearly with the movement of the cover plate but according to a higher function, thereby enabling a much more accurate dosing, particularly in the case of smaller deliveries.

FIG.1

EP 0 511 714 A2

The invention relates to a device for spreading disseminable material comprising a frame movable over the land, at least one storage container supported by the frame and having at least one outflow opening for the material, a dosing mechanism connecting to the outflow opening and consisting of a standing cylindrical tube-like element with a recess arranged in the wall thereof and an adjustable plate closing off this recess and a rotatably driven bottom plate closing the open underside of the tube-like element.

Such a device is known as a centrifugal spreader and serves for spreading fertilizer, seed, salt and other such disseminable material which is poured in bulk into a storage container and must then be spread according to a determined pattern. Such a device is usually carried or pulled by an agricultural tractor or the like.

The invention has for its object to improve the above-mentioned device such that a better dosing becomes possible and that the spreading pattern is brought about under different conditions such that a uniform delivery over the field is effected and that no material falls outside the area for spreading.

The device according to the invention is distinguished in that the recess in the cylinder wall of the tube-like element widens from the bottom edge thereof towards the top.

It is herewith possible that, due to the up and downward movement of the cover plate, the passage of the recess with which the amount of material for spreading is determined per unit of time is not enlarged linearly with the movement of the cover plate but according to a higher function, thereby enabling a much more accurate dosing, particularly in the case of smaller deliveries. The nature of the material for spreading, namely whether this is coarse or fine granular or powder-form material, has less influence on the dosing because of the chosen shape of the recess.

In a preferred embodiment the shape of the recess is mirror symmetrical relative to a longitudinal plane of the cylinder whereby the delivery onto the rotating spreading plate can be determined accurately as to position, whereby the spreading pattern is affected hardly or not at all.

In a further development of the invention at least the bottom plate and the dosing mechanism arranged there-above and consisting of the tube-like element with cover plate is supported by a sub-frame that is adjustable about a horizontal pivot axis relative to the main frame. The casting width can be hereby considerably enlarged in simple manner without having to tilt the whole device including the storage container and without essentially changing the delivery of the disseminable material.

To further an undisturbed transfer of disseminable material from the storage container to the tiltable dosing mechanism, it is recommended to arrange the lying pivot axis through a point on the centre line of the cylindrical tube-like element close to the top end thereof.

For correct adjustment of the device in stationary situation, that is, that while the bottom plate is driven the device is stationary, it is recommended to embody the bottom plate with a central part and an annular part fixed releasably thereon, onto which blades are arranged for spreading the material.

In the first position in which the annular part is fixedly attached to the central part, the central part and the annular part with the blades form a throwing element for spreading the disseminable material. In another position with a detached annular part the corresponding dose per unit of time can still be measured by causing the bottom plate to rotate, where the material is then collected in a bucket or the like without being spread.

Finally, the invention proposes, when two dosing mechanisms with associated rotating bottom plates are used, to arrange a standing screen plate between the two dosing mechanisms in order to influence the spreading pattern such that spreading can be carried out accurately along a perimeter without crossing this perimeter, which can be important in the case of ditches and the like which must not be contaminated with artificial fertilizer.

Above mentioned and other features of the invention will be further elucidated below with reference to an embodiment. In the drawing:

fig. 1 shows a perspective front view of a double spreader device with partially broken away wall parts of the storage container,

fig. 2 and 3 each show an upright side view, partially in section of the device of fig. 1, of a single dosing mechanism in two positions,

fig. 4 shows a perspective view of a part of the device according to fig. 1 provided with an alternative embodiment of the dosing mechanisme,

fig. 5 shows a perspective view of a part of the spreading mechanisme in fig. 1, in which the shape of the spreading blades is altered,

fig. 6 shows a schematic top view of the spreading pattern obtained by the two spreading mechanisms,

fig. 7 shows an upright side view corresponding with fig. 2, wherein the spreading mechanism is placed in the stationary dosing position,

fig. 8 shows a rear view of the device of fig. 1, provided with a screen plate, which device is carried by a tractor,

fig. 9 shows a detail of the device of fig. 6 with the screen plate on an enlarged scale,

fig. 10 shows a perspective top view of a storage container applicable in a device according to fig. 1, provided with a tiltable cover grid,

fig. 11 shows a perspective top view of the joint structure of the cover grid in fig. 10,

fig. 12 shows a hydraulic diagram for a hydraulically driven spreading device.

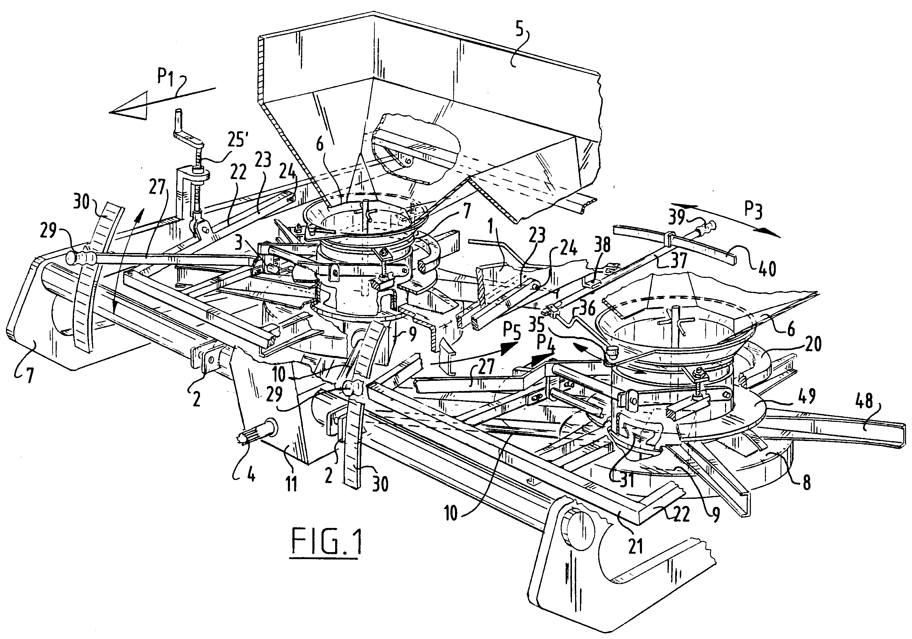

The embodiment of the invention shown in fig. 1 is provided with a main frame 1 that consists of two U-shaped side parts which are oriented mutually parallel and mutually joined by cross beams such that two adjacently disposed spreaders can support thereon. Arranged on the front side are coupling points 2 for the lifting arms of the three-point coupling for a tractor, while coupling point 3 serves to fix the top rod. By coupling the main frame 1 to the three-point lifting device of the tractor the frame can be moved over the field in the direction of the arrow P1.

An input shaft 4 can be connected via an intermediate shaft to the power take-off shaft of the tractor and serves to set into rotation the spreading mechanisms which are further elucidated hereinbelow. The main frame 1 supports a storage container 5 which is constructed here from plate-like parts and which is provided with two outflow openings 6 on the underside thereof onto which a dosing mechanism 7 connects. This dosing mechanism is further elucidated below. Arranged on the underside of the dosing mechanism 7 is a rotating bottom plate 8 which is connected to the standing output shaft of a gear box 9 which is connected by an intermediate shaft 10 to the input shaft 4 of the intermediate gear box 11.

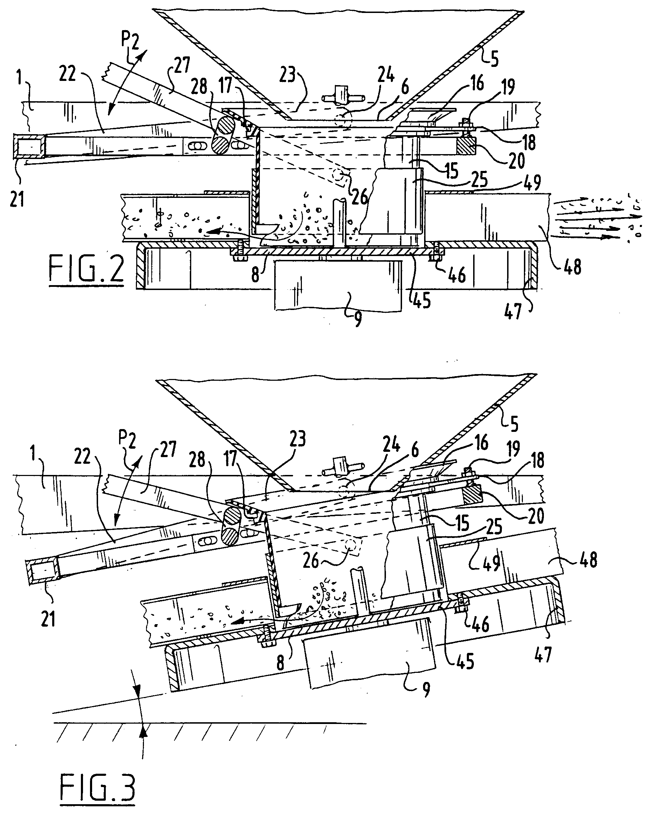

It is noted also with reference to fig. 2 that the dosing mechanism 7 consists of a cylindrical tube-like element 15 which extends between the bottom plate 8 and the open underside 6 of the storage container 5. At the top the tube-like element 15 continues as a widening flange 16 wherein an annular groove 17 is arranged at the transition between the flange 16 and the tube-like element 15. Into this annular groove 17 protrude ends of strips 18 which are fixed by means of a bolt connection 19 to a sub-frame 20 extending around the tube-like element 15. This U-shaped sub-frame 20 is fixed to a cross beam 21 which is provided on both sides with two rearwardly extending arms 22, the free end 23 of which is pivotally coupled to the main frame part 1 with a pin 24. The arm 22 is coupled between the pivot point 24 and the cross beam 21 to an adjusting mechanism consisting of a screw spindle 25' which can be turned manually and is supported on the main frame 1.

In another embodiment (not shown) it is also possible to fix the cross beam 21 for direct pivoting on the front beam of the main frame. The sub-frame 20 is thereby tiltable around an axis extending in the direction of forward movement P1.

Arranged along the periphery of the cylindrical tube-like element 15 is a cover plate 25 which is up and downwardly adjustable on the outside of the tube-like element 15. The cover plate 25 embodied here as a sliding sleeve is coupled at 26 to a control arm 27 which is connected via a coupling piece 28 to the part 20 of the sub-frame. The arm 27 is provided on the free end with a control handle 29 which can be pushed up and down along a graduated scale 30, this such that the cover sleeve 25 is adjustable up and down along the tube-like element 15.

The cylindrical wall of the tube-like element 15 is embodied at the bottom edge with a recess 31 which according to the invention widens towards the top. The standing side edges thereof have an S-shaped form, this such that the space of the recess along the bottom edge is shorter than the lengthwise dimension of the top boundary thereof.

The recess 31 of the tube-like element 15 can also be received into an insert piece (not shown) which can be received close-fitting in a window in the tube-like element of larger dimensioning than the recess 31. By exchanging the insert piece for another insert piece the shape and dimensioning of the recess 31 is thus easily adaptable to the working conditions of the spreader or type of material that has to be spread.

The funnel-shaped widening 16 of the tube-like element 15 is embodied on the front side with an eye 35 onto which a coupling rod 36 pivotally engages which is coupled to a central control rod 37 which is supported for pivoting in horizontal sense at 38 on the middle part of the frame 1. The central control rod 37 is provided with a handle 39 with which the rod is reciprocally movable in the direction of the arrow P3 along a graduated scale 40. The movement according to arrow P3 causes a rotating movement of the eye 35 and therefore a rotating movement of the tube-like element 15 around the central axis of this tube-like element, whereby the opening 31 can be placed in a determined angular position relative to the central axis.

There now follows a description of the bottom plate 8 with reference to fig. 2. The bottom plate consists of a central portion 45 onto which an annular part 47 is fixed along the peripheral edge by means of bolts 46. The annular part 47 carries blades 48 which are distributed uniformly along the periphery thereof and are connected at the top by a ring 49 extending around the tube-like element 15.

The blades can be of random form and consist here of U-shaped strips which extend more or less radially outward.

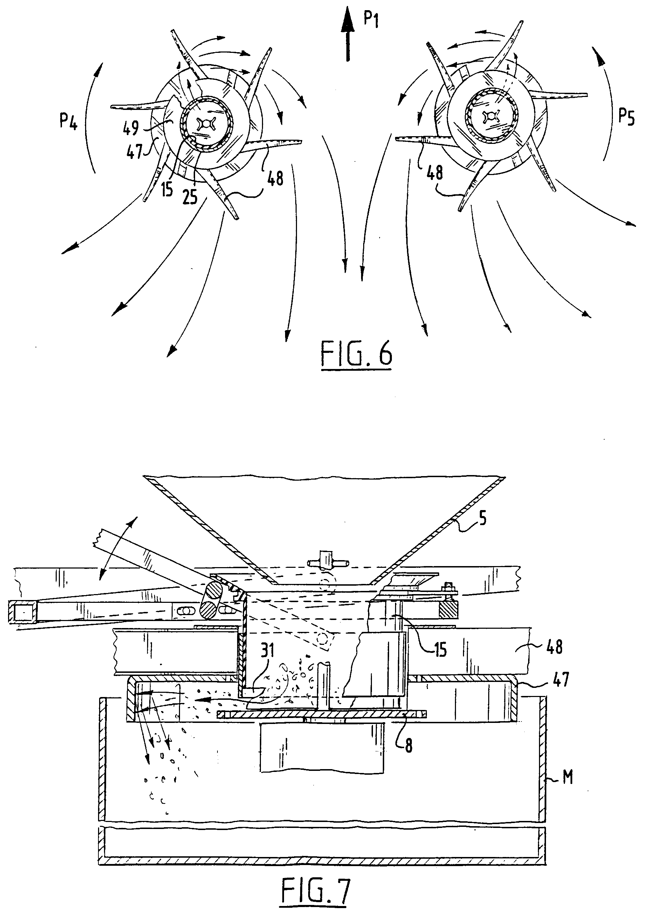

The bolts 46 can be released easily whereby the ring 47 with the blades 48 and the top ring 49 can be pushed upwards as one unit along the outer periphery of the tube-like element 15 and the cover sleeve 25. The function hereof is further elucidated below in view of fig. 7.

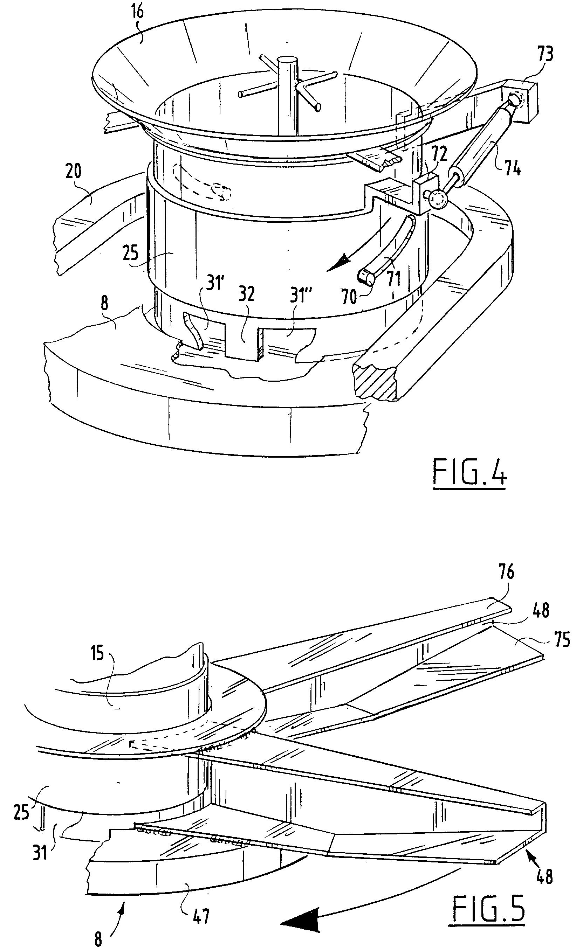

Fig. 4 shows an alternative embodiment of the dosing mechanisme. The same parts are provided with the same reference numerals as in fig. 1. It is noticed that the discharge recess 31 is devided in two through holes 31' and 31'' adjacent to eachother. The edge portions of these through holes are pointed outwardly and are shaped corresponding the embodiment of recess 31. The through holes are parted from eachother by a downwardly protruding lip 32, that forms a part of the tube-like element 15.

In this embodiment the cover plate 25 can rotate around the tube-like element 15 and shifted in upwards and downwards direction as well. Therefore the tube-like element 15 is provided with two pins 70 located diametrically to eachother and protruding outwardly, said pins being received in an elongate and oblique opening 71 in the cover plate 25. Moreover, the cover plate 25 is provided with an arm 72 extending radially, whilst the tube-like element 15 is provided with a bended arm 73. Between the three extremities of the arms 72 and 73 is arranged an adjusting motor 74, which can be embodied hydraulicly or electrically.

By extending or diminishing the distance inbetween the joints of the arms 72 and 73 respectively by means of the adjusting motor 74, the arm 72 will be rotated with respect to the tube-like element 15 taking along the cover plate 25.

The movement is such that by turning the lower edge of the cover plate 25 will move downwardly and will cover the opening 31' and 31'' respectively gradually up to a complete closing position. In the reverse sense the openings will be released gradually. In this way the dosing of the material from the storage container upon the rotating bottom plate 8 can be adjusted according to the invention.

Fig. 5 shows an alternative embodiment of the blades 48, having a channel shaped configuration in cross section. The lower flange 75 of the U-shaped blade 48 is wider than the upper flange 76, assuring a minimum of loss or leakage of material along the leading edge of the lower flange, assuring there is an optimum spreading of the material.

The operation of the above described device is as follows.

After the user has filled the storage container 5 with disseminable material this material will move downward via the outflow opening 6 into the cylindrical tube-like element 15 and will come to rest on the central portion of the bottom plate 8. After starting the drive motor via the input shaft 4 the bottom plate 8 will be set via the drive mechanism 9, 10 and 11 into a rotation according to the arrows P4 and P5, see also fig. 6.

Assuming that the cover sleeve 25 is situated in the lowest position, no material will exit via the recess 31. However, as soon as the sliding sleeve 25 is moved upward by means of the handles 29 and the control rod 27, material will be thrown out through the central part of the bottom plate 8 in the direction of the annular part 47 and will be carried along by the blades 48 which produces a spreading pattern as according to fig. 6.

By sliding the sleeve 25 higher along the tube-like element 15 more material will be thrown out. The quantity of material is determined by the surface area of the released passage through the sliding sleeve 25, which area increases in accordance with a function of higher degree in relation to the vertical sliding movement of the sleeve 25 owing to the widening form of the recess 31.

The position of the outflow opening 31 can be adjusted with the handle 39 via the coupling rods 37 and 36. This determines whether the pattern according to fig. 6 is moved more to the left or to the right relative to the direction of forward movement P1. It is also noted here that due to the coupling of the coupling rod 36 of respectively the left hand and right hand dosing mechanism on either side of the pivot point 38 of the control rod 37 the openings are moved more or less mirror symmetrically to the middle of the device, whereby the pattern according to fig. 6 is more concentratedly or widely adjusted.

By adjusting the spindles 25' on both sides of the frame 1 the sub-frame 20 can be pivoted around the pivot point 24, wherein it is noted that the pivot point 24 is situated at about the height of the top edge of the tube-like element 15 and through the centre line thereof. A pivoting of the sub-frame 20 around the point 24 causes an angle adjustment of the dosing tube-like element 15 with bottom plate 8 as according to fig. 3 so that the material can be spread further in the position according to fig. 3 compared to that according to fig. 2. Because of the unchanging position of the storage container 5 the flow of the material into this tube-like element will hardly be affected.

This effect can also occur if the cross beam 21 is directly coupled to the front beam of main frame 1, wherein the pivot axis runs through the top edge portion of the tube-like element 15.

There now follows a description of fig. 7, in which is shown the adjusting position of the device according to fig. 1-3. By removing the bolts 46 the annular part 47 with the blades 48 can be moved upwards and for example be suspended on the storage container 5. By causing the central portion of the bottom 8 to rotate material from the storage container 5 can be thrown outward via the tube-like element 15 and the recess 31 thereof, which dosing virtually corresponds with that of the operating position. The material is collected however by the stationary outer edge of the annular part 47 which is embodied as a downward pointing apron, whereby this material can be collected in a measuring tank M in fig. 7. The desired dosing or delivery can therefore be adjusted within a determined time.

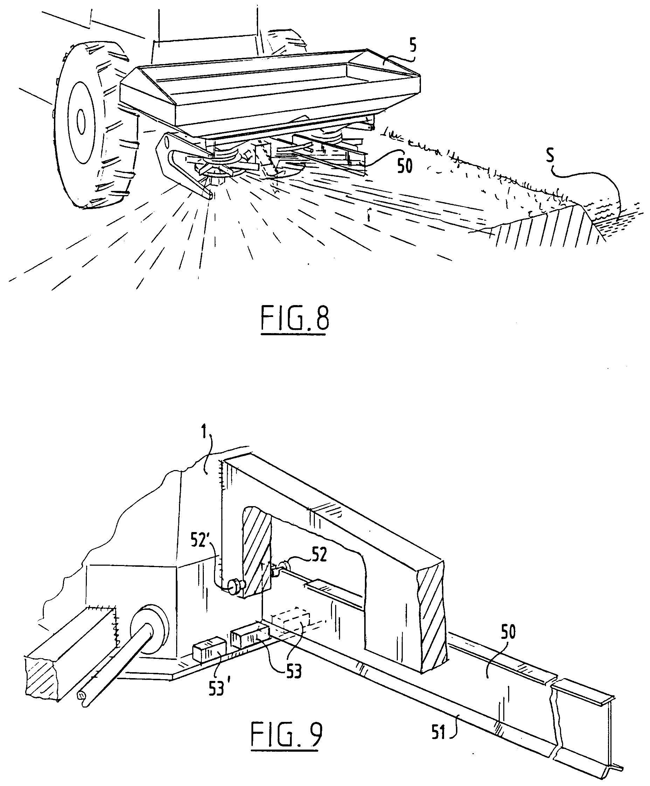

With the above described device it is also possible to alter the spreading pattern according to fig. 6 such that operation can take place along the side of a ditch, see fig. 8. For this purpose the dosing tube-like element for example on the right in fig. 8 can be closed independently of the other by moving the sleeve 25 downward and the left-hand dosing means can be adjusted in the desired manner. Both bottom plates continue to rotate but only the left-hand spreader is operational. In order to prevent material nevertheless being thrown in the direction of the ditch S by this left-hand spreader in fig. 8, a screen plate 50 can be arranged between both spreaders. This screen plate 50 can take any random form but is depicted here as an I-profile with roof-shaped bottom flange 51, which plate 50 is suspended at the front on the main frame 1 by means of a fastening pin 52. The roof-shaped bottom flange 51 is received between two stops 53 of the main frame 1.

The screening plate 50 can also be arranged on the right-hand side of the frame 1, for which purpose extra fixing means 52' and 53' are arranged.

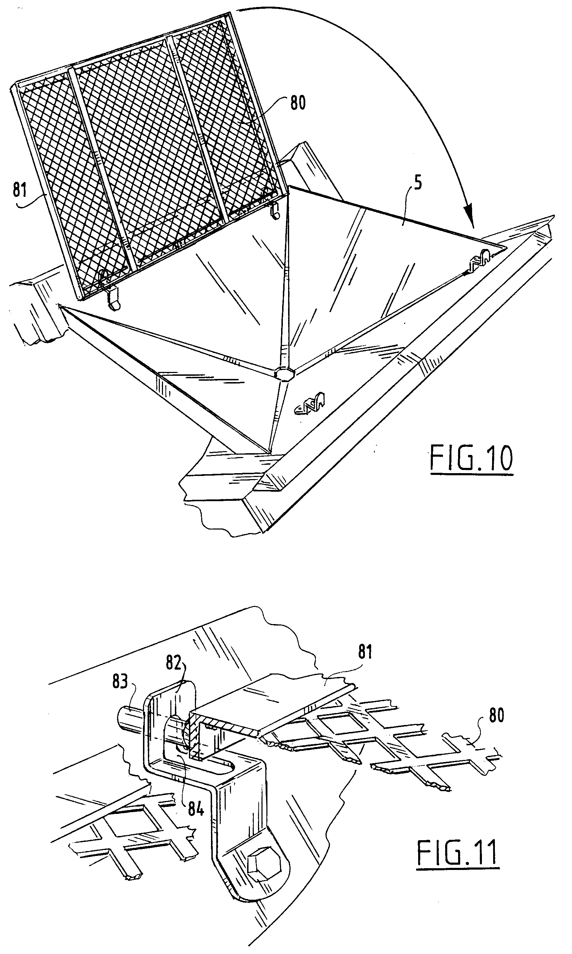

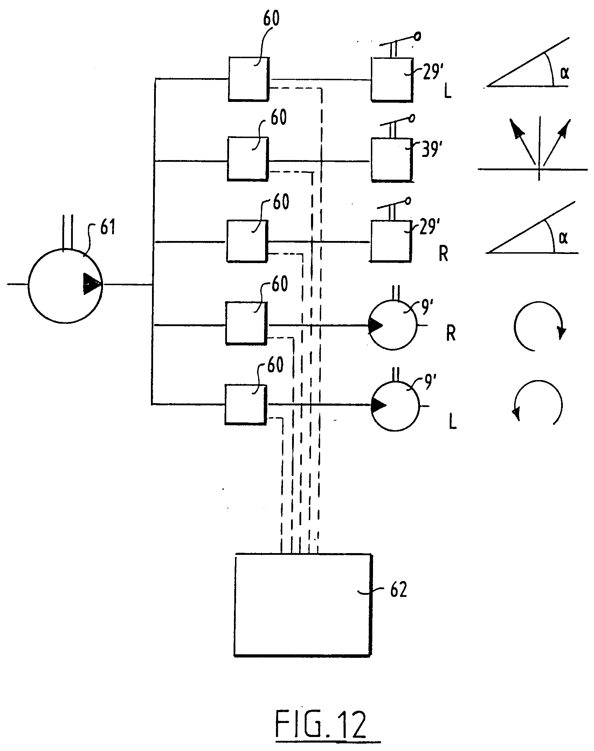

Fig. 10 shows a storage container 5 in perspective top view, said container 5 is covered by a sieve grid 80 near the top side. The grid 80 is taken up in a frame 81, said frame being pivotable connected to the wall of the container 5. The joint consists of a bracket 82 connected to the wall of the container 5, and a pin 83 connected to the outer circumference of the frame 81. The pin 83 protrudes in a elongate opening 84 of the bracket 82, said opening 84 is formed such that in the lowered position of the grid 80 upon the storage container 5 the situation according to fig. 11 is achieved. When raising the grid the pin 83 will be brought in a vertical position through the elongate opening 84. A joint like this has the advantage that it will easily resist corrosion caused by aggressive spreadable materials.

Moreover the grid 80 together with the frame 81 is easily removable from the bracket 82 by raising the frame and thereupon pulling it away in a horizontal sense.

The above described embodiments show spreaders whereof the adjustment and drive of the various components takes place by mechanical means. It is also possible to drive the different components by hydraulic means, for which purpose the handles with levers 29, 39 for example are replaced by a hydraulic cylinder, and the gear boxes 9 for causing rotation of the spreader disc are replaced by hydraulic motors.

Shown in fig. 12 is a diagram for such a hydraulic system. The handles are designated here with the numerals 29' and 39' respectively and the hydromotors with 9' with the notation L for left and R for right depending on the relevant spreader disc. With the cylinders 29 the elevation of the spreader disc can be adjusted, indicated with angle $\alpha$ on the right in fig. 12, with the cylinder 39' the spreading angle of the material flows which leave the spreader discs, and with the hydraulic motors 9' in each case the speed of revolution that is imparted to the spreader disc.

With associated control valves or other hydraulic control means 60 each of the cylinders or motors can be separately adjusted. The whole hydraulic feed is created by the central hydraulic pump 61 which forms part of the tractor or is driven thereby.

The control of the regulating means 60 can take place by means of a computer 62 with which all the components are separately controlled, this such that optimal spreading of the material takes place. If for example the computing system is suitable for a specific pre-set program, then the user has only to enter that specific program into the computer whereby each regulating member 60 obtains the desired setting, whereby the correct elevation, spreading and speed of revolution is adjusted.

It is also possible for the user to adjust one of the regulating members manually, whereby via feedback all the other regulating members are automatically set to the correct position via the computer 62.

The invention is not limited to the above described embodiment.

## Claims

1. Device for spreading disseminable material comprising a frame movable over the ground, at least one storage container supported by the frame and having at least one outflow opening for the material, a dosing mechanism connecting onto the outflow opening and consisting of a standing cylindrical tube-like element with a recess arranged in the wall thereof and an adjustable plate closing off this recess and a rotatably driven bottom plate closing the open underside of the tube-like element, **characterized in that** the recess in the cylinder wall of the tube-like element widens from the bottom edge thereof towards the top.

2. Device as claimed in claim 1, **characterized in that** the shape of the recess is mirror symmetrical relative to a lengthwise plane of the cylindrical tube-like element.

3. Device as claimed in claim 1 or 2, **characterized in that** the recess is a part of an insert piece that is arranged close-fittingly in a window of the tube-like element of larger dimensioning than the recess.

4. Device as claimed in claim 1, 2 or 3, **characterized in that** at least the bottom plate and the tube-like element with cover plate is supported in a sub-frame, which sub-frame is coupled to the main frame about a lying pivot axis.

5. Device as claimed in claim 4, **characterized in that** the pivot axis of the sub-frame runs through a point of the centre line of the cylindrical tube-like element close to the top end thereof.

6. Device for spreading disseminable material comprising a frame movable over the ground, at least one storage container supported by the frame and having at least one outflow opening for the material, a dosing mechanism connecting to the outflow opening and consisting of a standing cylindrical tube-like element with a recess arranged in the wall thereof and an adjustable plate closing off this recess and a rotatably driven bottom plate closing the open underside of the tube-like element, wherein the bottom plate extends beyond the periphery of the tube-like element and is provided with standing blades, **characterized in that** the bottom plate is formed by a central portion and an annular part fixed releasably thereto and carrying the blades.

7. Device as claimed in claim 6, **characterized in that** the annular part of the bottom plate is provided with a downward oriented apron.

8. Device provided with two or more dosing mechanisms with associated driven bottom plates, **characterized in that** a standing screen plate (5) is coupled releasably to the frame between the rotatably driven bottom plates.

9. Device as claimed in one of the previous claims, **characterized in that** the blades of the spreading mechanisme are formed as channel-like elements having a U-like cross-section, the flanges of which extending in a horizontal plane, wherein the lower flange is wider than the upper flange.

10. Device as claimed in one of the previous claims, **characterized in that** the storage container is covered by a sieve-grid arranged in a pivotable way.

11. Device as claimed in claim 10, **characterized in that** the sieve grid is connected to the storage container by means of a joint in the form of a pin-hole structure.

FIG.1

FIG.2

FIG.3

FIG.4

FIG.5

FIG.6

FIG.7

FIG.8

FIG.9

FIG.10

FIG.11

FIG.12